# EUROPÄISCHE PATENTSCHRIFT

(11) **EP 4 522 441 B1**
(45) Veröffentlichungstag und Bekanntmachung des Hinweises auf die Patenterteilung: **03.12.2025**
(21) Anmeldenummer: 23703421.0
(22) Anmeldetag: 02.02.2023
(51) Int. Cl.: B60K 15/05, E05F 15/616

(54) **LADEKLAPPENSYSTEM EINES KRAFTFAHRZEUGS**
CHARGING FLAP SYSTEM FOR A MOTOR VEHICLE
SYSTÈME DE VOLET DE CHARGE POUR UN VÉHICULE MOTORISÉ

(30) Priorität: 12.05.2022 DE 102022111935
(43) Veröffentlichungstag der Anmeldung: 19.03.2025
(73) Patentinhaber: HUF Hülsbeck & Fürst GmbH & Co. KG, 42551 Velbert (DE)
(72) Erfinder: KOCH, Andreas, 42579 Heiligenhaus (DE); SCHÜTZ, Heiko, 42549 Velbert (DE)
(86) Internationale Anmeldenummer: PCT/EP2023/052556
(87) Internationale Veröffentlichungsnummer: WO 2023/217420

(56) Entgegenhaltungen:
- DE-A1- 102009 060 119
- DE-A1- 102019 118 910
- DE-A1- 102020 116 833
- US-A1- 2013 134 737

## Beschreibung

Die Erfindung richtet sich auf ein Ladeklappensystem eines Kraftfahrzeugs, aufweisend ein an einer Kraftfahrzeug-Karosserie befestigbar ausgebildetes Trägerelement, welches einen eine Ausnehmung umgebenden Trägerrahmen aufweist, eine Aktuator-Stelleinrichtung, welche an dem Trägerelement befestigt ist, eine Ladeklappe, welche motorisch durch die Aktuator-Stelleinrichtung zwischen einer Ruhestellung, in welcher die Ladeklappe bündig in der Ausnehmung des Trägerelements angeordnet ist, und einer Betriebsstellung, in welcher die Ladeklappe in eine Ausstellrichtung aus der Ausnehmung des Trägerelements herausbewegt und die Ausnehmung freigebend angeordnet ist, bewegbar an dem Trägerelement gelagert ist, und ein Dichtungselement, welches an der Ladeklappe und/oder an der Ausnehmung befestigt ist und welches in der Ruhestellung einen Spalt zwischen der Ladeklappe und der Ausnehmung abdichtet, wobei die Ladeklappe manuell durch einen Benutzer aus der Ruhestellung in eine Aktivierungsstellung, in welcher die Ladeklappe in die Ausnehmung entgegen der Ausstellrichtung hineinbewegt und ein Signal zur Inbetriebnahme der Aktuator-Stelleinrichtung initiierend angeordnet ist, bewegbar an dem Trägerelement gelagert ist.

Aus dem Stand der Technik sind Systeme bekannt, bei welchen eine Ladeklappe für einen Ladevorgang eines Elektrofahrzeugs durch ein Einwärts-Drücken bzw. einem Drücken entgegen der Ausstellrichtung freigegeben und dann in eine Betriebsstellung bewegt wird, in welcher ein Ladestecker dann mit einem entsprechenden Ladeanschluss verbunden werden kann, welcher zuvor von der Ladeklappe verdeckt war. Dabei bewirkt das Einwärts-Drücken der in einer Ruhestellung befindlichen Ladeklappe eine Aktivierung eines motorischen Antriebs, welcher dann die Ladeklappe aus der Ruhestellung, in welcher die Ladeklappe flächenbündig mit einem Fahrzeugverkleidungsbauteil angeordnet ist, in die Betriebsstellung bewegt. Ein um den Rand der Ladeklappe umlaufendes Dichtungselement dient dabei zur Rückstellung der Ladeklappe in ihre flächenbündige Ruhestellung, wenn die Ladeklappe einwärts und entgegen der Ausstellrichtung gedrückt wird. Zur Bewirkung dieser Rückstell-Funktion muss das Dichtungselement aus einem harten Werkstoff bestehen, was der Forderung nach einer langen Lebensdauer bei unterschiedlichen klimatischen Bedingungen entgegensteht, denn ein Dichtungselement aus einem weichen Werkstoff dichtet bekanntermaßen besser ab als ein harter Werkstoff, welcher zudem bei Kälte schneller altert. DE 10 2019 118910 A1 offenbart ein Ladeklappensystem mit einem Dichtungselement und einer motorisch angetriebenen Stelleinrichtung zur Rückstellung der Ladeklappe in ihre flächenbündige Ruhestellung, wobei die Stelleinrichtung durch ein Signal zur Inbetriebnahme der Stelleinrichtung ferngesteuert wird.

Der Erfindung liegt die Aufgabe zugrunde eine Lösung zu schaffen, die auf konstruktiv einfache Weise ein Ladeklappensystem bereitstellt, welches sich durch eine zuverlässige Dichtwirkung über eine lange Lebensdauer bei unterschiedlichen Temperatureinflüssen auszeichnet und welches zusätzlich bei einer Bewegung entgegen der Ausstellrichtung eine Rückstellung der Ladeklappe in ihre flächenbündige Ruhestellung ermöglicht.

Bei einem Ladeklappensystem der einleitend beschriebenen Art wird die Aufgabe gemäß den Merkmalen des Anspruchs 1 dadurch gelöst, dass ein Rückstellelement an dem Trägerelement gelagert ist, welches eine die Ladeklappe aus der Aktivierungsstellung zurück in die Ruhestellung drängende oder die Ladeklappe in der Ruhestellung haltende Rückstellkraft auf die Ladeklappe ausübend ausgebildet ist.

Vorteilhafte und zweckmäßige Ausgestaltungen und Weiterbildungen der Erfindung ergeben sich aus den Unteransprüchen.

Durch die Erfindung wird ein Ladeklappensystem zur Verfügung gestellt, welches sich durch eine einfache Konstruktion und durch ein besonderes Konzept für die Rückstellung der Ladeklappe aus der Aktivierungsstellung zurück in die Ruhestellung auszeichnet. Während im Stand der Technik ein Dichtungselement zusätzlich zu seiner Aufgabe der Abdichtung auch für die Rückstellung verantwortlich ist, ist es erfindungsgemäß vorgesehen, dass das Dichtungselement unabhängig und entkoppelt von der Funktion der Rückstellung der Ladeklappe agiert. Denn die Erfindung sieht zu diesem Zweck ein zusätzlich zur Dichtung vorhandenes Rückstellelement vor, welches speziell für die Funktion der Rückstellung ausgelegt und ausgebildet ist, wohingegen das Dichtungselement als einzige Funktion die Abdichtung besitzt, so dass durch die Erfindung die Flexibilität bei der Wahl des Werkstoffs bzw. des Materials für das Dichtungselement stark erhöht ist und eine geeignete Wahl hinsichtlich einer guten Dichtwirkung und langen Lebensdauer getroffen werden kann.

Eine konstruktiv günstige Möglichkeit der Gestaltung des Rückstellelements ist in Ausgestaltung der Erfindung dadurch gegeben, dass das Rückstellelement als eine Blattfeder ausgebildet ist, welche an dem Trägerelement abgestützt gelagert ist.

Eine kompakte Bauweise ist bei einer anderen alternativen Ausgestaltung dadurch gegeben, dass das Rückstellelement als ein federbelasteter Aktivierungstaster ausgebildet ist. Ein solcher Aktivierungstaster kann dabei zusätzlich zu der Funktion der Rückstellung der Ladeklappe die weitere Funktion der Inbetriebsetzung der Aktuator-Stelleinrichtung aufweisen.

Eine noch andere alternative Ausgestaltung des Rückstellelements ist dadurch vorgesehen, dass das Rückstellelement als ein elastisch verformbares Anschlagelement ausgebildet ist. Das Anschlagelement dient dabei nicht der Abdichtung, sondern ausschließlich der Rückstellung, so dass eine geeignete Materialauswahl möglich ist, welche die besonderen Anforderungen an ein solches Rückstellelement erfüllt.

Zur Aktivierung eines Ausstellvorgangs der Ladeklappe sieht die Erfindung in weiterer Ausgestaltung vor, dass die Rückstellkraft des Rückstellelements wenigstens sechsundzwanzig Newton beträgt. Durch die Höhe der Rückstellkraft, welche der Eindrückkraft entspricht, ist sichergestellt, dass es sich um eine gewollte und nicht zufällige Aktivierung handelt, wenn die Ladeklappe manuell durch einen Benutzer aus der Ruhestellung in die Aktivierungsstellung bewegt wird. Somit kann die Rückstellkraft auch als Schwellwert angesehen werden, ab welchem eine Aktivierung bzw. Inbetriebsetzung der Aktuator-Stelleinrichtung initiiert wird.

Eine besonders gut abdichtende Dichtwirkung sowie eine herausragende Beständigkeit gegenüber Alterung ist in weiterer Ausgestaltung der Erfindung dadurch gegeben, dass das Dichtungselement aus einem thermoplastischen Elastomer gebildet ist.

Im Hinblick auf eine kompakte Ausbildung und eine effiziente Herstellung sieht die Erfindung in Ausgestaltung vor, dass das Dichtungselement und die Ladeklappe als ein einstückiges Bauteil durch ein 2K-Spritzguss-Verfahren hergestellt ausgebildet sind.

Zur Verriegelung der Ladeklappe, damit diese sich zum Beispiel während der Fahrt des Kraftfahrzeugs nicht unerwünscht aus der Ruhestellung in die Betriebsstellung bewegen kann, ist in weiterer Ausgestaltung der Erfindung vorgesehen, dass ein Rastelement schwenkbar an dem Trägerelement gelagert ist, wobei ein Gegenrastelement an der Ladeklappe angeformt ist, und wobei in der Ruhestellung das Rastelement mit dem Gegenrastelement eine Bewegung der Lagerklappe in Ausstellrichtung blockierend in Eingriff stehend angeordnet ist.

Schließlich sieht die Erfindung in weiterer Ausgestaltung vor, dass in der Aktivierungsstellung das Gegenrastelement entgegen der Ausstellrichtung gegen die Rückstellkraft des Rückstellelements bewegt angeordnet ist. Somit wird punktuell über das Gegenrastelement die Ladeklappe wieder in ihre flächenbündige Ruhestellung zurückbewegt.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine schematische Seitenansicht eines Kraftfahrzeugs mit einer Ladeklappe eines erfindungsgemäßen Ladeklappensystems,
Figur 2 eine perspektivische Ansicht auf ein Karosseriebauteil des Kraftfahrzeugs mit der in einer Ruhestellung angeordneten Ladeklappe,
Figur 3 eine perspektivische Ansicht auf das Karosseriebauteil des Kraftfahrzeugs mit der in einer Aktivierungsstellung angeordneten Ladeklappe,
Figur 4 eine perspektivische Ansicht auf das Karosseriebauteil des Kraftfahrzeugs mit der in einer Betriebsstellung angeordneten Ladeklappe,
Figur 5 eine perspektivische Vorderansicht auf das erfindungsgemäße Ladeklappensystem,
Figur 6 eine perspektivische Rückansicht auf das erfindungsgemäße Ladeklappensystem,
Figur 7 eine weitere perspektivische Rückansicht auf das erfindungsgemäße Ladeklappensystem mit einer zusätzlichen Detailansicht,
Figur 8 eine perspektivische Detailansicht auf ein Rückstellelement des erfindungsgemäßen Ladeklappensystems, wobei die Ladeklappe in ihrer Ruhestellung angeordnet ist,
Figur 9 eine andere perspektivische Detailansicht auf das Rückstellelement aus Figur 8,
Figur 10 eine perspektivische Detailansicht auf das Rückstellelement des erfindungsgemäßen Ladeklappensystems, wobei die Ladeklappe in ihrer Aktivierungsstellung angeordnet ist, und
Figur 11 eine perspektivische Detailansicht auf ein alternatives Rückstellelement des erfindungsgemäßen Ladeklappensystems.

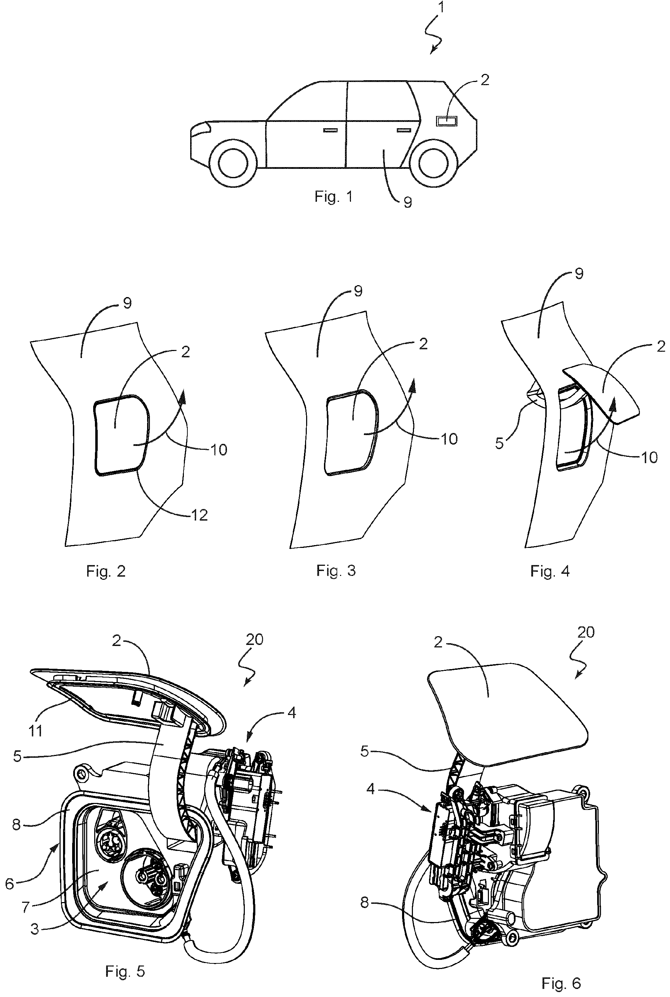

In der Figur 1 ist ein Kraftfahrzeug 1 in Form eines PKWs exemplarisch dargestellt, welches in dem Beispiel über eine Ladeklappe 2 verfügt. Die Ladeklappe 2, welche zu einem Ladeklappensystem 20 gehört, ist in einer in Figur 2 gezeigten Ruhestellung anordenbar ausgebildet. In der Ruhestellung überdeckt und verschließt die Ladeklappe 2 eine Mulde, in welcher ein Ladeanschluss 3 (siehe zum Beispiel Figur 5) für einen zu verbindenden Ladestecker angeordnet ist. Damit der Ladestecker mit dem Ladeanschluss 3 verbunden werden kann, muss die Ladeklappe 2 in eine Betriebsstellung aufschwenken, wobei die Betriebsstellung in der Figur 4 gezeigt ist. Das Ladeklappensystem 20 umfasst zusätzlich zu der Ladeklappe 2 ferner eine Aktuator-Stelleinrichtung 4, welche die Bewegung der Ladeklappe 2 aus der Ruhestellung in die Betriebsstellung bewirkt, wobei die in den Figuren 5, 6 und 7 gezeigte Aktuator-Stelleinrichtung 4 unter anderem einen Aktuator und einen Hebelmechanismus aufweist, durch welche ein Schwingenarm 5 bewegt wird, an dessen freiem Ende die Ladeklappe 2 angeordnet ist. Dabei ist, wie aus den Figuren 5, 6 und 7 zu erkennen ist, die Aktuator-Stelleinrichtung 4 an einem Trägerelement 6 des Ladeklappensystems 20 befestigt bzw. gelagert, wobei das Trägerelement 6 wiederum an einer Kraftfahrzeug-Karosserie 9 befestigbar ausgebildet ist. Das Trägerelement 6 weist einen eine Ausnehmung 7 umgebenden Trägerrahmen 8 auf, wobei der Ladeanschluss 3 innerhalb der Ausnehmung 7 angeordnet ist. Wie vorstehend angesprochen, ist die Ladeklappe 2 durch die Aktuator-Stelleinrichtung 4 zwischen der Ruhestellung, in welcher die Ladeklappe 2 bündig in der Ausnehmung 7 des Trägerelements 6 und flächenbündig zu der Kraftfahrzeug-Karosserie 9 angeordnet ist, und der Betriebsstellung, in welcher die Ladeklappe 2 in eine Ausstellrichtung 10 aus der Ausnehmung 7 des Trägerelements 6 herausbewegt und die Ausnehmung 7 freigebend angeordnet, motorisch bewegbar an dem Trägerelement 6 gelagert. In der Ruhestellung sorgt ein Dichtungselement 11 des Ladeklappensystems 20 für die erforderliche Abdichtung zwischen der Ladeklappe 2 und dem Rand der Ausnehmung 7 bzw. für die erforderliche Abdichtung eines Spalts 12 zwischen der Ladeklappe 2 und der Ausnehmung 7, wobei die Ladeklappe 2 in der Ruhestellung flächenbündig zu der Kraftfahrzeug-Karosserie 9 angeordnet ist. Das Dichtungselement 11, welches zum Beispiel aus der Figur 5 ersichtlich ist, ist umlaufend am Rand der Ladeklappe 2 angeordnet, wobei alternativ auch eine Anordnung an der Ausnehmung 7 des Trägerelements 6 vorstellbar ist. Ferner ist das Dichtungselement 11 aus einem thermoplastischen Elastomer gebildet. Dabei kann das Dichtungselement 11 und die Ladeklappe 2 auch als ein einstückiges Bauteil durch ein 2K-Spritzguss-Verfahren hergestellt sein.

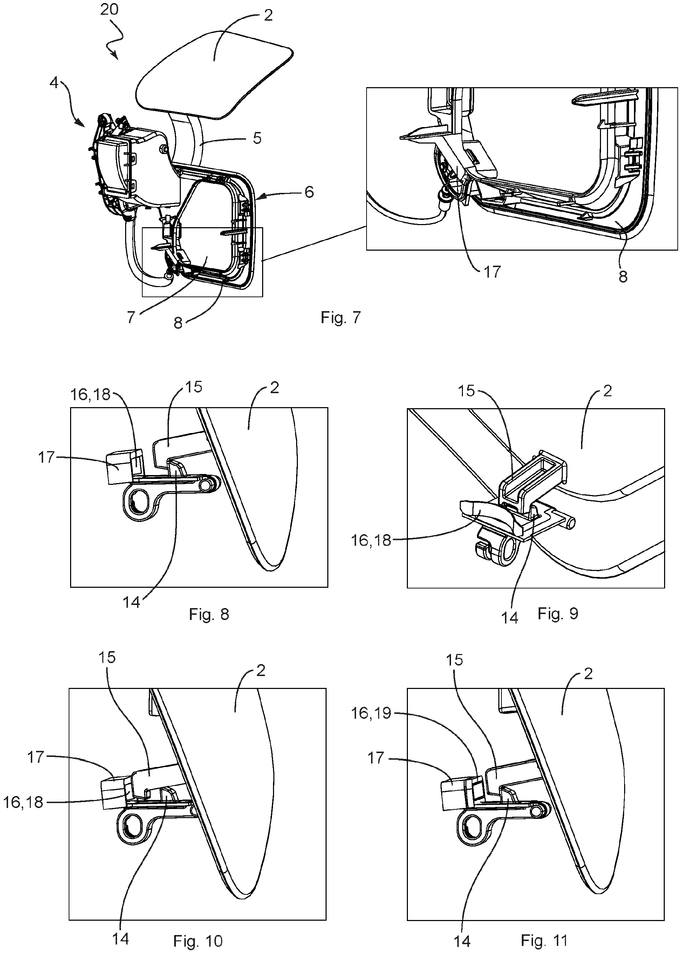

Damit die Ladeklappe 2 aus der Ruhestellung in die Betriebsstellung von der Aktuator-Stelleinrichtung 4 motorisch bewegt werden kann, muss die Aktuator-Stelleinrichtung 4 zuvor in Betrieb gesetzt werden. Das Inbetriebsetzen erfolgt dabei durch eine durch einen Benutzer bewirkte Bewegung der Ladeklappe 2, bei welcher die Ladeklappe 2 manuell durch den Benutzer aus der Ruhestellung (siehe Figur 2) in eine Aktivierungsstellung (siehe Figur 3) bewegt wird. In der Aktivierungsstellung ist die Ladeklappe 2 in die Ausnehmung 7 entgegen der Ausstellrichtung 10 hineinbewegt angeordnet, wobei die Ladeklappe 2 zum Beispiel in der Aktivierungsstellung gegen einen Taster drücken kann, welcher ein Signal zur Inbetriebnahme der Aktuator-Stelleinrichtung 4 initiiert, wodurch dann die Aktuator-Stelleinrichtung 4 in Betrieb gesetzt wird. Im Betrieb der Aktuator-Stelleinrichtung 4 wird dann von der Aktuator-Stelleinrichtung 4 eine Verriegelung entriegelt, welche ein Rastelement 14 und ein Gegenrastelement 15 umfasst, die beispielsweise aus den Figuren 8 bis 11 ersichtlich sind. Das Rastelement 14 ist an dem Trägerelement 6, welches aus Gründen der Übersichtlichkeit in den Figuren 8 bis 11 nicht gezeigt ist, schwenkbar gelagert, wohingegen das Gegenrastelement an der Rückseite der Ladeklappe 2 angeformt ist und sich entgegen der Ausstellrichtung 10 bzw. von der Rückseite der Ladeklappe 2 aus erstreckt. Die Figuren 8, 9 und 11 zeigen die Ruhestellung, in welcher das Rastelement 14 mit dem Gegenrastelement 15 eine Bewegung der Ladeklappe 2 in Ausstellrichtung 10 blockierend in Eingriff stehend angeordnet ist. Wenn nun die Aktuator-Stelleinrichtung 4 in Betrieb gesetzt ist, dann sorgt die Aktuator-Stelleinrichtung 4 zunächst dafür, dass die Blockade durch das Rastelement 14 und das Gegenrastelement 15 aufgehoben wird, indem das Rastelement 14 verschwenkt wird und außer Eingriff mit dem Gegenrastelement 15 gelangt. Anschließend bewegt dann die Aktuator-Stelleinrichtung 4 die Ladeklappe 2 aus der Ruhestellung in die Betriebsstellung.

Dabei sind das Rastelement 14 und das Gegenrastelement 15 derart ausgebildet, dass eine Bewegung der Ladeklappe nur in Ausstellrichtung 10 blockiert ist und dass eine Bewegung der Ladeklappe 2 entgegen der Ausstellrichtung 10 in die Aktivierungsstellung dennoch möglich ist. Diese Bewegung ist durch die jeweilige hakenförmige Ausbildung von Rastelement 14 und Gegenrastelement 15 möglich und erfolgt dabei entgegen einer Rückstellkraft, welche von einem Rückstellelement 16 des Ladeklappensystems 20 ausgeübt wird. Das Rückstellelement 16 ist an dem Trägerelement 6 gelagert, wobei die Lagerung beispielsweise durch ein zumindest einseitig offenes Gehäuse 17 (siehe zum Beispiel die Figuren 7, 8, 10 und 11) bewirkt werden kann. Das Rückstellelement 16 ist eine die Ladeklappe 2 aus der Aktivierungsstellung zurück in die Ruhestellung drängende oder die Ladeklappe 2 in der Ruhestellung haltende Rückstellkraft auf die Ladeklappe 2 ausübend ausgebildet.

Bei dem in den Figuren 8, 9 und 10 gezeigten Ausführungsbeispiel ist das Rückstellelement 16 als eine Blattfeder 18 ausgebildet, welche an dem Trägerelement 6 und ggf. in dem Gehäuse 17 abgestützt gelagert ist. Die Figuren 8 und 9 (in Figur 9 ist das Gehäuse 17 aus Gründen der Übersichtlichkeit ausgelassen) zeigen dabei die Ruhestellung, in welcher die Ladeklappe 2 durch das Rastelement 14 und das Gegenrastelement 15 verriegelt ist, wohingegen die Figur 10 die Aktivierungsstellung zeigt, in welcher die Ladeklappe 2 entgegen der Ausstellrichtung 10 bewegt angeordnet ist. In der Aktivierungsstellung ist insbesondere das Gegenrastelement 15 entgegen der Ausstellrichtung 10 gegen die Rückstellkraft des Rückstellelements 16 bewegt angeordnet. Sobald der Benutzer die Ladeklappe 2 freigibt, drückt das Rückstellelement 16 die Ladeklappe 2 wieder zurück in die Ruhestellung.

Die Figur 11 zeigt eine alternative Ausführungsform eines Rückstellelements 16, wobei hier das Rückstellelement als ein elastisch verformbares Anschlagelement 19 ausgebildet ist. Bei einer anderen alternativen und in den Figuren nicht gezeigten Ausgestaltung wäre es denkbar, dass das Rückstellelement 16 als ein federbelasteter Aktivierungstaster ausgebildet ist.

Bei allen denkbaren Ausführungen eines Rückstellelements ist es zur Vermeidung eines ungewollten Eindrückens der Ladeklappe 2 und zur Sicherstellung einer gewünschten Inbetriebsetzung der Aktuator-Stelleinrichtung 4 ist vorgesehen, dass die Rückstellkraft des Rückstellelements 16 wenigstens sechsundzwanzig Newton beträgt.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der von den Ansprüchen definierte Bereich der Erfindung verlassen wird.

### Bezugszeichenliste

1 Kraftfahrzeug
2 Ladeklappe
3 Ladeanschluss
4 Aktuator-Stelleinrichtung
5 Schwingenarm
6 Trägerelement
7 Ausnehmung
8 Trägerrahmen
9 Kraftfahrzeug-Karosserie
10 Ausstellrichtung
11 Dichtungselement
12 Spalt
14 Rastelement
15 Gegenrastelement
16 Rückstellelement
17 Gehäuse
18 Blattfeder
19 Anschlagelement
20 Ladeklappensystem

## Patentansprüche

1. Ladeklappensystem (20) eines Kraftfahrzeugs (1), aufweisend ein an einer Kraftfahrzeug-Karosserie befestigbar ausgebildetes Trägerelement (6), welches einen eine Ausnehmung (7) umgebenden Trägerrahmen (8) aufweist, eine Aktuator-Stelleinrichtung (4), welche an dem Trägerelement (6) befestigt ist, eine Ladeklappe (2), welche motorisch durch die Aktuator-Stelleinrichtung (4) zwischen einer Ruhestellung, in welcher die Ladeklappe (2) bündig in der Ausnehmung (7) des Trägerelements (6) angeordnet ist, und einer Betriebsstellung, in welcher die Ladeklappe (2) in eine Ausstellrichtung (10) aus der Ausnehmung (7) des Trägerelements (6) herausbewegt und die Ausnehmung (7) freigebend angeordnet ist, bewegbar an dem Trägerelement (6) gelagert ist, und ein Dichtungselement (11), welches an der Ladeklappe (2) und/oder an der Ausnehmung (7) befestigt ist und welches in der Ruhestellung einen Spalt (12) zwischen der Ladeklappe (2) und der Ausnehmung (7) abdichtet, wobei die Ladeklappe (2) manuell durch einen Benutzer aus der Ruhestellung in eine Aktivierungsstellung, in welcher die Ladeklappe (2) in die Ausnehmung (7) entgegen der Ausstellrichtung (10) hineinbewegt und ein Signal zur Inbetriebnahme der Aktuator-Stelleinrichtung (4) initiierend angeordnet ist, bewegbar an dem Trägerelement (6) gelagert ist,
**dadurch gekennzeichnet, dass**
ein Rückstellelement (16) an dem Trägerelement (6) gelagert ist, welches eine die Ladeklappe (2) aus der Aktivierungsstellung zurück in die Ruhestellung drängende oder die Ladeklappe (2) in der Ruhestellung haltende Rückstellkraft auf die Ladeklappe (2) ausübend ausgebildet ist.

2. Ladeklappensystem (20) nach Anspruch 1, **dadurch gekennzeichnet, dass** das Rückstellelement (16) als eine Blattfeder (18) ausgebildet ist, welche an dem Trägerelement (6) abgestützt gelagert ist.

3. Ladeklappensystem (20) nach Anspruch 1, **dadurch gekennzeichnet, dass** das Rückstellelement (16) als ein federbelasteter Aktivierungstaster ausgebildet ist.

4. Ladeklappensystem (20) nach Anspruch 1, **dadurch gekennzeichnet, dass** das Rückstellelement (16) als ein elastisch verformbares Anschlagelement (19) ausgebildet ist.

5. Ladeklappensystem (20) nach einem der vorhergehenden Ansprüche, **dadurch gekennzeichnet, dass** die Rückstellkraft des Rückstellelements (16) wenigstens sechsundzwanzig Newton beträgt.

6. Ladeklappensystem (20) nach einem der vorhergehenden Ansprüche, **dadurch gekennzeichnet, dass** das Dichtungselement (11) aus einem thermoplastischen Elastomer gebildet ist.

7. Ladeklappensystem (20) nach einem der vorhergehenden Ansprüche, **dadurch gekennzeichnet, dass** das Dichtungselement (11) und die Ladeklappe (2) als ein einstückiges Bauteil durch ein 2K-Spritzguss-Verfahren hergestellt ist.

8. Ladeklappensystem (20) nach einem der vorhergehenden Ansprüche, **dadurch gekennzeichnet, dass** ein Rastelement (14) schwenkbar an dem Trägerelement (6) gelagert ist, wobei ein Gegenrastelement (15) an der Ladeklappe (2) angeformt ist, und wobei in der Ruhestellung das Rastelement (14) mit dem Gegenrastelement (15) eine Bewegung der Lagerklappe (2) in Ausstellrichtung (10) blockierend in Eingriff stehend angeordnet ist.

9. Ladeklappensystem (20) nach Anspruch 8, **dadurch gekennzeichnet, dass** in der Aktivierungsstellung das Gegenrastelement (15) entgegen der Ausstellrichtung (10) gegen die Rückstellkraft des Rückstellelements (16) bewegt angeordnet ist.

## Claims

1. Charger flap system (20) of a motor vehicle (1), including a support element (6) which is designed to be attachable to a motor vehicle body and which has a support frame (8) surrounding a recess (7), an actuator adjusting device (4) which is attached to the support element (6), a charger flap (2) which is mounted on the support element (6) so as to be movable in motorised manner by the actuator adjusting device (4) between a rest position in which the charger flap (2) is arranged flush in the recess (7) of the support element (6), and an operating position in which the charger flap (2) is moved out of the recess (7) in the support element (6) in an opening direction (10) and is arranged to uncover the recess (7), and a sealing element (11) which is attached to the charger flap (2) and/or to the recess (7) and which in the rest position seals a gap (12) between the charger flap (2) and the recess (7), wherein the charger flap (2) is mounted movably on the support element (6) in such manner that it can be moved manually by a user from the rest position to an activation position, in which the charger flap (2) is moved into the recess (7) in a direction opposite to the opening direction (10) and initiate a signal for starting up the actuator control device (4),
**characterized in that**
a restoring element (16) is mounted on the support element (6), and is designed to exert a restoring force on the charger flap (2) that presses the charger flap (2) from the activation position back into the rest position, or retains the charger flap (2) in the resting position.

2. Charger flap system (20) according to Claim 1, **characterized in that** the restoring element (16) is designed as a leaf spring (18) which is mounted so as to be braced on the support element (6).

3. Charger flap system (20) according to Claim 1, **characterized in that** the restoring element (16) is designed as a spring-loaded activation button.

4. Charger flap system (20) according to Claim 1, **characterized in that** the restoring element (16) is designed as an elastically deformable stop element (19).

5. Charger flap system (20) according to any one of the preceding claims, **characterized in that** the restoring force of the restoring element (16) is at least twenty-six Newtons.

6. Charger flap system (20) according to any one of the preceding claims, **characterized in that** the sealing element (11) is formed from a thermoplastic elastomer.

7. Charger flap system (20) according to any one of the preceding claims, **characterized in that** the sealing element (11) and the charger flap (2) are manufactured as a single-part component in a 2K injection moulding process.

8. Charger flap system (20) according to any one of the preceding claims, **characterized in that** a detent element (14) is mounted pivotably on the support element (6), wherein a counter-detent element (15) is conformed on the charger flap (2), and wherein when the detent element (14) is in the rest position it is arranged to engage with the counter-detent element (15) in such manner as to block a movement of the charger flap (2) in the opening direction (10).

9. Charger flap system (20) according to Claim 8, **characterized in that** in the activation position the counter-detent element (15) is arranged to be moved in the opposite direction to the opening direction (10), against the restoring force of the restoring element (16) .

## Revendications

1. Système de hayon de chargement (20) d'un véhicule automobile (1), comportant un élément de support (6) constitué pouvant être fixé à une carrosserie de véhicule automobile, lequel comporte un cadre de support (8) entourant un évidement (7), un système de réglage d'actionneur (4), lequel est fixé à l'élément de support (6), un hayon de chargement (2), lequel est logé pouvant être mobile sur l'élément de support (6) de façon motorisée par le système de réglage d'actionneur (4) entre une position de repos, dans laquelle le hayon de chargement (2) est disposé en affleurement dans l'évidement (7) de l'élément de support (6) et une position de fonctionnement dans laquelle le hayon de chargement (2) ressort de l'évidement (7) de l'élément de support (6) dans une direction de déploiement (10) et est disposé libérant l'évidement (7), et un élément d'étanchéité (11), lequel est fixé au hayon de chargement (2) et/ou à l'évidement (7) et lequel dans la position de repos étanchéifie un espacement (12) entre le hayon de chargement (2) et l'évidement (7), sachant que le hayon de chargement (2) est logé pouvant être mobile sur l'élément de support (6) de façon manuelle par un utilisateur de la position de repos dans une position d'activation dans laquelle le hayon de chargement (2) pénètre dans l'évidement (7) en opposition à la direction de déploiement (10) et est disposé initiant un signal de mise en marche du système de réglage d'actionneur (4),
**caractérisé en ce que**
l'élément de rappel (16) est logé sur l'élément de support (6), lequel est constitué exerçant une force de rappel sur le hayon de chargement (2) repoussant le hayon de chargement (2) hors de la position d'activation dans la position de repos ou maintenant le hayon de chargement (2) dans la position de repos.

2. Système de hayon de chargement (20) selon la revendication 1, **caractérisé en ce que** l'élément de rappel (16) est constitué sous la forme d'un ressort à lame (18), lequel est logé en soutenu sur l'élément de support (6).

3. Système de hayon de chargement (20) selon la revendication 1, **caractérisé en ce que** l'élément de rappel (16) est constitué sous la forme d'un palpeur d'activation à ressort.

4. Système de hayon de chargement (20) selon la revendication 1, **caractérisé en ce que** l'élément de rappel (16) est constitué sous la forme d'un élément de butée élastiquement déformable (19).

5. Système de hayon de chargement (20) selon l'une quelconque des revendications précédentes, **caractérisé en ce que** la force de rappel de l'élément de rappel (16) est d'au moins vingt six Newton.

6. Système de hayon de chargement (20) selon l'une quelconque des revendications précédentes, **caractérisé en ce que** l'élément d'étanchéité (11) est formé dans un élastomère thermoplastique.

7. Système de hayon de chargement (20) selon l'une quelconque des revendications précédentes, **caractérisé en ce que** l'élément d'étanchéité (11) et le hayon de chargement (2) sont fabriqués sous la forme d'un composant monobloc par un procédé de moulage par injection à deux composants.

8. Système de hayon de chargement (20) selon l'une quelconque des revendications précédentes, **caractérisé en ce qu'**un élément d'encliquetage (14) est logé pouvant pivoter sur l'élément de support (6), sachant qu'un élément d'encliquetage opposé (15) est conformé sur le hayon de chargement (2) et sachant que l'élément d'encliquetage (14) dans la position de repos est disposé étant en prise avec l'élément d'encliquetage opposé (15) bloquant un mouvement du hayon de chargement (2) dans la position de déploiement (10).

9. Système de hayon de chargement (20) selon la revendication 8, **caractérisé en ce que** dans la position d'activation, l'élément d'encliquetage opposé (15) est disposé déplacé en opposition à la direction de déploiement (10) contre la force de rappel de l'élément de rappel (16).
